# EUROPÄISCHE PATENTSCHRIFT

(11) **EP 0 543 046 B1**
(45) Veröffentlichungstag und Bekanntmachung des Hinweises auf die Patenterteilung: **27.09.1995**
(21) Anmeldenummer: 91119915.6
(22) Anmeldetag: 22.11.1991
(51) Int. Cl.: F16B 35/00

(54) **Schraubeinheit**
Screw unit
Ensemble de vis

(43) Veröffentlichungstag der Anmeldung: 26.05.1993
(73) Patentinhaber: Simon, Werner, D-58566 Kierspe (DE)
(72) Erfinder: Simon, Werner, D-58566 Kierspe (DE)
(74) Vertreter: Buse, Karl Georg, Dipl.-Phys.

(56) Entgegenhaltungen:
- BE-A- 351 610
- DE-A- 1 498 418
- FR-A- 1 550 240
- GB-A- 578 110

## Beschreibung

Die Erfindung betrifft eine Schraubeinheit zur ein- und feststellbaren Überbrückung von Distanzen zwischen Bauteilen, Konsolen, u.dgl., bestehend aus einem Stellflächen aufweisenden Schraubenzapfen mit einer Zentralbohrung und einer darauf aufgedrehten Schraubenmutter, die als ein Innengewinde aufweisende Stützhülse mit bereichsweise angeordneten Stellflächen ausgebildet ist, in welche der Schraubenzapfen etwa bündig eindrehbar ist.

Eine bekannte Schraubeinheit der eingangs genannten Art weist als Schraubenmutter eine genormte Wellenmutter auf, die auf den Schaft eines Schraubenzapfens aufgedreht ist, dessen Zentrum in axialer Richtung von einer Bohrung durchdrungen ist. Dieser Schraubenzapfen ist mit einem Fußflansch versehen, an welchem sich eine den Schraubenzapfen umfassende, ein Normteil bildende Federscheibe abstützt, die ihrerseits auf ein unter der Wellenmutter angeordnetes, der Sicherung der Einstellage der Wellenmutter dienendes Sicherungsblech einwirkt. Der maximale Verstellweg dieser bekannten Schraubeinheit beträgt nur etwa 40% der ohnehin geringen Stärke der genormten Wellenmutter. Zur Verdeutlichung dieses geringen Stellweges sei darauf hingewiesen, daß bei einer Dimensionierung des Schraubenzapfens mit einem Gewinde von M 30 x 1,5 mm der gesamte Verstellweg nur etwa 3 mm beträgt. Dieser Verstellweg mag genügen, um Unebenheiten, fertigungsbedingte Toleranzen und Montageungenauigkeiten auszugleichen, ist jedoch nicht geeignet, zusätzliche Aufgaben zu erfüllen, die beispielsweise darin gesehen werden können, daß eine durch einen Keilriementrieb verbundene Motor-Getriebebaueinheit nach einer längeren Betriebszeit infolge Ausdehnung der Keilriemen nachgespannt werden muß. Erfahrungsgemäß werden nämlich bei Elektromotoren bis ca. 7,5 KW für die Einstellung des Achsabstandes zwischen Motor und Getriebe sowie für die spätere Nachstellung der Keilriemen ca. 20 mm Verstellweg benötigt. Dieser Verstellweg liegt weit über den Möglichkeiten der bekannten Schraubeinheit.

Aus der FR 1 550 240 ist eine Schraubeinheit bekannt, deren Schraubenzapfen eine Zentralbohrung aufweist und der in eine Stützhülse in Bezug auf die Eindringtiefe variabel eindrehbar ist. Zur Verstellung von Schraubenzapfen und Stützhülse zueinander dienen zwar keine Stellflächen sondern damit äquivalente Radialbohrungen zum Ansetzen eines Werkzeuges. Obschon durch den balligen Stützfuß und eine diesen aufnehmende konkave Kugelkalottenscheibe eine Anpassung an eine mögliche Neigungslage erzielt werden kann, fehlt eine Sicherung der Einstellage ebenso wie eine Sicherung gegen Ausdrehen des Schraubenzapfens aus der Stützhülse.

Die Aufgabe der vorliegenden Erfindung besteht darin, eine Schraubeinheit der eingangs genannten Art dahingehend zu verbessern, daß die sowohl zum Höhenausgleich als auch zur Distanzeinstellung bei größeren Verstellwegen benutzbare Schraubeinheit in ihrer Einstellage gesichert werden kann, wobei ein Ausdrehen des Schraubenzapfens aus der Stützhülse verhindert werden soll.

Diese Aufgabe ist erfindungsgemäß dadurch gelöst, daß die Stützhülse eine diese in Einstellage haltende Sicherung aufweist und an ihrem einem Stellkragen des Schraubenzapfens zugekehrten Ende mit einem nach innen vorspringenden, das Innengewinde aufweisenden Ringkragen versehen ist, während am freien Ende des Schraubenzapfens ein Anschlagglied als Ausdrehsicherung für die Einhaltung des Stellweges angeordnet ist. Dieses Anschlagglied mag vorteilhaft aus einem in einer Nut des Gewindeschaftes festgelegten Sicherungsring gebildet sein.

Eine derartige ausgebildete Schraubeinheit kann sowohl zur Abstandshaltung als auch zur Nivelierung zwischen zwei Bauteilen eingesetzt werden und läßt sich außerdem über einen größeren Verstellweg ein- und nachstellen, ohne daß ein Ausdrehen des Schraubenzapfens aus der Stützhülse möglich ist.

Zwecks einfacher Verstellung von Stützhülse uns Schraubenzapfen nebeneinander mit gleichen Werkzeugen weisen sowohl die Stützhülse als auch der Schraubenzapfen vorteilhaft an den voneinander wegweisenden Stirnenden einen die Stellflächen aufweisenden, in Form und Größe übereinstimmenden Stellkragen auf. Die Sicherung der Einstellage könnte durch die Verwendung von einem Selbsthemmung erzeugenden Feingewinde übernommen werden, wobei es jedoch vorteilhaft sein mag, zur Unterstützung der Sicherungslage die Sicherung aus einer den Mantel der Stützhülse radial durchdringenden Gewindestiftschraube, insbesondere aus Kunststoff zu bilden.

In Fällen, in denen die Schraubeinheit Erschütterungen oder sonstigen Beeinflussungen ausgesetzt ist, wird nach einem weiteren Ausgestaltungsmerkmal der Erfindung vorgeschlagen, zwischen dem Stellkragen des Schraubenzapfens und der Stützhülse eine Kontermutter auf dem Gewindeschaft des Schraubenzapfens anzuordnen. Dabei ist es vorteilhaft, wenn auch die Kontermutter in Form und größe mit den Stellkragen von Stützhülse und Schraubenzapfen übereinstimmt.

Die Erfindung ist in Ausführungsbeispielen auf der Zeichnung dargestellt und wird nachfolgend näher beschrieben. Es zeigen:
- Fig. 1: ein Ausführungsbeispiel der Schraubeinheit in einem Längsschnitt im zusammengeschraubten Zustand, wobei der Schraubenzapfen und die Stützhülse einen Anschlag zur Vermeidung des ungewollten Herausdrehens des Schraubenzapfens aus der Stellhülse aufweist,
- Fig. 2: eine zwischen Motorfuß und Getriebekonsole angeordnete Schraubeinheit in einem Vertikalschnitt nach der Linie II - II von Fig. 5 in einer gegenüber dieser vergrößerten Darstellung,
- Fig. 3: ein weiteres Ausführungsbeispiel der erfindungsgemäßen Schraubeinheit in einer Fig. 1 analogen Schnittdarstellung, bei welcher jedoch zwischen der Stützhülse und dem Stellkragen des Schraubenzapfens eine Kontermutter angeordnet ist, jedoch der Anschlag an der Stützhülse auf der Zeichnung weggelassen ist,
- Fig. 4: die aus Fig. 3 ersichtliche Schraubeinheit, bei welcher der Schraubenbolzen in seine maximale Verstellage überführt wurde,
- Fig. 5: einen beispielhaften Anwendungsfall der Schraubeinheit als Distanz- und Nachstellglied zwischen einem Antriebsmotor und einem nachgeschalteten Getriebe, in einer Seitenansicht.

Die aus den Figuren ersichtliche Schraubeinheit besteht im wesentlichen aus einer Stützhülse 10 und einem Schraubenzapfen 11. Die Verbindung zwischen der Stützhülse 10 und dem Schraubenzapfen 11 ist durch Gewinde hergestellt, indem der Schraubenzapfen 11 ein Außengewinde 12 aufweist, das in ein adäquates Innengewinde 13 der Stützhülse 10 eingreift. Der Schraubenzapfen 11 weist an seinem Oberende einen in radialer Richtung gegenüber dem Außendurchmesser der Stützhülse 10 vorspringenden Stellkragen 14 auf, der mit Stellflächen 15 zum Angriff eines Stellwerkzeuges versehen ist. Auch die Stützhülse 10 weist an ihrem Unterende einen radial vorspringenden Stellkragen 16 auf, der in Größe und Form mit den Außenabmessungen des Stellkragens 14 übereinstimmt und ebenfalls mit Stellflächen 15 versehen ist, die den Stellflächen des Stellkragens 14 entsprechen. Obschon die Stellflächen als einfache, ggf. ein Mehrkant bildende Anflachungen ausgebildet sein könnten, sind bei dem vorliegenden Ausführungsbeispiel die Stellflächen durch mehrere am Umfang der Stellkragen 14 und 16 angeordnete, sich in axialer Richtung erstreckende Nuten ausgebildet. Der Schraubenzapfen 11 ist in seiner axialen Richtung von einer Zentralbohrung 17 durchdrungen, auf deren Zweck noch eingegangen wird. Die Mantelfläche der Stützhülse 10 ist in ihrem oberen Bereich von einer sich quer zu ihrer Längsachse erstreckenden Gewindestiftschraube 18 durchdrungen, die vorzugsweise aus einem Kunststoff, wie beispielsweise Polyamid, besteht, und die nach dem Einstellen eine leichtgängige Verstellung der Schraubeinheit verhindert.

Die Stützhülse 10 weist nur an ihrem dem Stellkragen 14 des Schraubenzapfens 11 zugekehrten Ende einen radial nach innen vorspringenden, mit dem Innengewinde 13 versehenen Ringkragen 20 auf, der einen Anschlag für ein am freien Ende des Schraubenzapfens 11 angeordnetes Anschlagglied 21 aufweist. Dieses Anschlagglied 21 kann beispielsweise aus einem in einer Nut 22 am Unterende des Schaftes vom Schraubenzapfen 11 festgelegten Sicherungsring gebildet sein. Als Sicherungsring kann ein Spannring, Seeger-Sicherungsring, Benzing-Ringsicherung od. dgl. Verwendung finden. Allerdings ist es auch möglich, als Anschlagglied 21 statt des Sicherungsringes einen Stift, einen Splint od. dgl. einzusetzen.

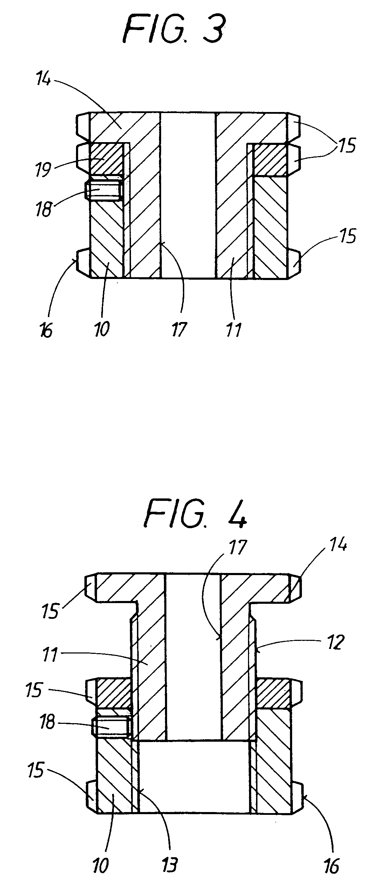

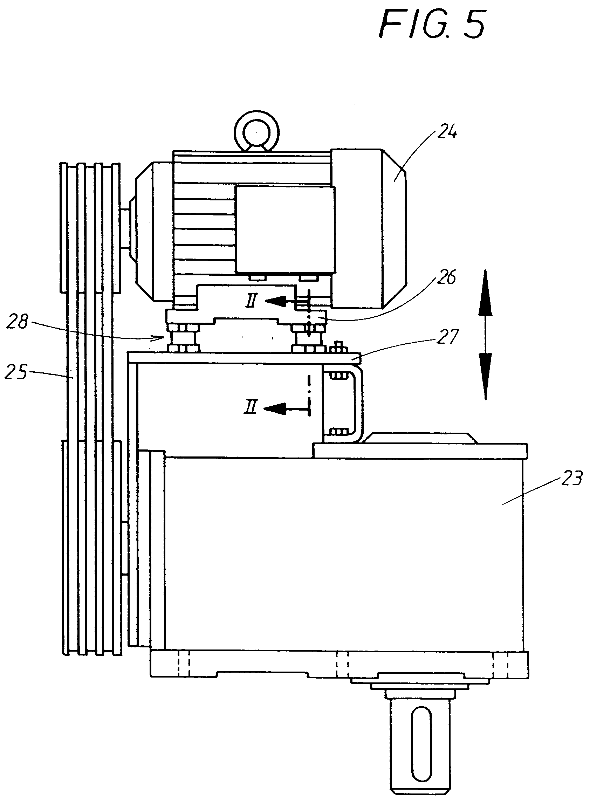

Bei dem in Fig. 5 dargestellten Anwendungsfall befindet sich oberhalb eines Getriebes 23 ein Elektromotor 24, der über einen Keilriementrieb 25 mit dem Getriebe 23 verbunden ist. Der Motor 24 ist über einen Motorfuß 26 mit einer Konsole 27 des Getriebes 23 durch Schraubeinheiten 28 verbunden. Dabei sind bei der aus Fig. 5 ersichtlichen Ausführungsform vier Schraubeinheiten zwischen dem Motorfuß 26 und der Konsole 27 des Getriebes 23 angeordnet. Nachdem eine Justierung des Elektromotors 24 gegenüber dem Getriebe 23 und gleichzeitig eine Einstellung des Keilriementriebes 25 durch entsprechende Einstellung der Schraubenzapfen 11 gegenüber der Stützhülse 10 erfolgt ist, wird durch die Zentralbohrung 17 der Schraubenzapfen jeweils eine Befestigungsschraube 29 hindurchgeführt, die oberseitig einen Kopf hat und unterseitig in ein Gewinde in der Konsolplatte eingeschraubt ist. Aus Sicherheitsgründen ist es ratsam, die Befestigungsschraube 29 vor der Justierung durch die Zentralbohrung 17 einzuschrauben; sie muß dann allerdings entsprechend des einzustellenden Verstellweges gelöst werden. Nach der endgültigen Einstellung wird die Befestigungsschraube dann festgezogen. Statt eines Gewindes in der Konsolplatte läßt sich auch eine Schraubenmutter unter der Konsolplatte anordnen und auf den Schaft der Befestigungsschraube aufdrehen. Wenn nun nach einiger Betriebszeit durch Dehnung der Keilriemen der Keilriemenstrang 25 nachgespannt werden muß, so lassen sich die Befestigungsschrauben 29 lösen und die Schraubeinheiten 28 im gewünschten Umfang auseinanderdrücken, so daß eine ausreichende Keilriemenspannung erzeugt werden kann. Danach lassen sich die Befestigungsschrauben 29 wieder festziehen. Dieser Befestigungszustand ist in Fig. 2 dargestellt.

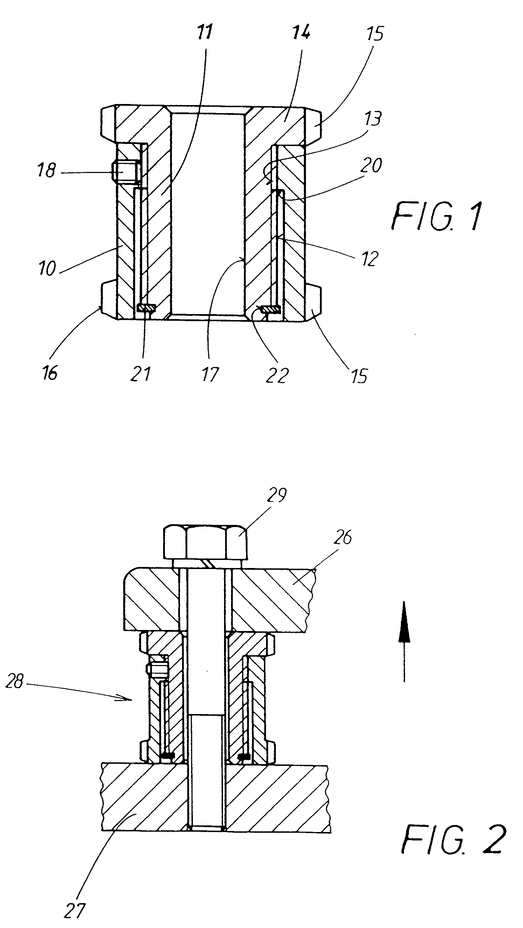

Das aus der Fig. 3 und 4 ersichtliche Ausführungsbeispiel entspricht im wesentlichen der aus den Fig. 1 und 2 ersichtlichen Schraubeinheit. Obschon auf den Zeichnungen die Ausdrehsicherung weggelassen ist, besteht der Unterschied lediglich darin, daß zwischen dem Stellkragen 14 des Schraubenzapfens 11 und dem Oberende der Stützhülse 10 auf dem Gewindeschaft des Schraubenzapfens 11 eine Kontermutter 19 angeordnet ist. Auch diese Kontermutter 19 ist mit Stellflächen 15 zum Angriff eines Stellwerkzeuges ausgestattet, wobei diese Stellflächen vorteilhaft baugleich mit den Stellflächen der Stellkragen 14 und 16 des Schraubenzapfens 11 bzw. der Stellhülse 10 sind. Dabei stimmen die Form und die Abmessungen der Stellkragen 14 und 16 mit der Form und der Abmessung der Kontermutter 19 überein, was bedeutet, daß die Stellkragen 14 und 16 der Kontermutter 19 nachgebildet sind, da es sich bei der Kontermutter um ein Normteil handelt. Mit dieser Kontermutter kann die eingestellte Lage der Schraubeinheit durch Verspannen der Gewinde gegeneinander unverrückbar festgelegt werden.

Wie bereits erwähnt, geben die dargestellten und vorbeschriebenen Ausführungsformen den Erfindungsgegenstand nur beispielsweise wieder, der keinesfalls allein darauf beschränkt ist. Es sind vielmehr noch mancherlei andere Ausführungen und Ausgestaltungen der Erfindung denkbar. Insbesondere handelt es sich bei dem aus Fig. 5 ersichtlichen Anwendungsfall lediglich um ein Beispiel, da sich die Schraubeinheiten vielfältig verwenden und einsetzen lassen.

## Patentansprüche

1. Schraubeinheit zur ein- und feststellbaren Überbrückung von Distanzen zwischen Bauteilen, Konsolen ud. dgl., bestehend aus einem Stellflächen (15) aufweisenden Schraubenzapfen (11) mit einer Zentralbohrung (17) und einer darauf aufgedrehten Schraubenmutter, die als ein Innengewinde (13) aufweisende Stützhülse (10) mit bereichsweise angeordneten Stellflächen (15) ausgebildet ist, in welche der Schraubenzapfen (11) etwa bündig eindrehbar ist,
**dadurch gekennzeichnet,**
daß die Stützhülse (10) eine diese in Einstellage haltende Sicherung (18) aufweist und an ihrem einem Stellkragen (14) des Schraubenzapfens (11) zugekehrten Ende mit einem nach innen vorspringenden, das Innengewinde (13) aufweisenden Ringkragen (20) versehen ist, während am freien Ende des Schraubenzapfens (11) ein Anschlagglied (21) als Ausdrehsicherung für die Einhaltung des Stellweges angeordnet ist.

2. Schraubeinheit nach Anspruch 1, dadurch gekennzeichnet, daß das Anschlagglied (21) aus einem in einer Nut (22) des Gewindeschaftes (12) festgelegten Sicherungsring gebildet ist.

3. Schraubeinheit nach Anspruch 1 oder 2, dadurch gekennzeichnet, daß sowohl die Stützhülse (10) als auch der Schraubenzapfen (11) an voneinander wegweisenden Stirnenden einen die Stellflächen (15) aufweisenden, in Form und Größe übereinstimmenden Stellkragen (14, 16) aufweisen.

4. Schraubeinheit nach einem der vorhergehenden Ansprüche, dadurch gekennzeichnet, daß als Sicherung für die Einstellage und für eine bestimmte Hemmung des Schraubenzapfens zur Schraubenmutter eine den Mantel der Stützhülse (10) radial durchdringende Gewindestiftschraube (18), insbesondere aus Kunststoff, vorgesehen ist.

5. Schraubeinheit nach einem der vorhergehenden Ansprüche, dadurch gekennzeichnet, daß zwischem dem Stellkragen (14) des Schraubenzapfens (11) und der Stützhülse (10) eine Kontermutter (19) auf dem Gewindeschaft des Schraubenzapfens (11) angeordnet ist.

6. Schraubeinheit nach Anspruch 5, dadurch gekennzeichnet, daß die Kontermutter (19) in Form und Größe mit den Stellkragen (14, 16) von Stützhülse (10) und Schraubenzapfen (11) übereinstimmt.

## Claims

1. A screw unit for adjustably and fixably bridging over distances between components brackets and the like, comprising a screw stud (11) having setting surfaces (15) and with a central bore (17), and a screw nut which is screwed thereon and which is in the form of a support sleeve (10) having a female screwthread (13), with setting surfaces (15) arranged in a region-wise manner, and into which the screw stud (11) can be screwed approximately flush, characterised in that the support sleeve (10) has a securing means (18) for holding it in the set position and at its end which is towards a setting collar (14) of the screw stud (11) the support sleeve (10) is provided with an inwardly projecting annular collar (20) which has the female screwthread (13), while arranged at the free end of the screw stud (11) is an abutment member (21) as an unscrewing securing bans for limiting the setting travel.

2. A screw unit according to claim 1 characterised in that the abutment (21) is formed from a securing ring which is fixed in a groove (22) in the screwthreaded shank (12).

3. A screw unit according to claim 1 or claim 2 characterised in that, at ends which face away from each other, both the support sleeve (10) and the screw stud (11) have a setting collar (14, 16) which have the setting surfaces (15) and which are the same in shape and size.

4. A screw unit according to one of the preceding claims characterised in that a grub screw (18), in particular of plastics material, which passes radially through the peripheral portion of the support sleeve (10) is provided as the securing means for the set position and for defined locking of the screw stud relative to the screw nut.

5. A screw unit according to one of the preceding claims characterised in that a lock nut (19) is arranged on the screwthreaded shank of the screw stud (11) between the setting collar (14) of the screw stud (11) and the support sleeve (10).

6. A screw unit according to claim 5 characterised in that the lock nut (19) is the same in shape and size as the setting collars (14, 16) of the support sleeve (10) and the screw stud (11).

## Revendications

1. Ensemble vissé pour régler et fixer le pontage de distance entre des composants, des consoles et analogues, constitué d'un tourillon fileté (11) présentant des faces de réglage (15), avec un alésage central (17) et un écrou vissé sur ce tourillon et réalisé sous la forme d'un manchon d'appui (10) qui présente un taraudage (13) avec des surfaces de réglage (15) disposées par zones, et dans lequel le tourillon fileté (11) peut être introduit par rotation, en prenant une position à peu près affleurée, caractérisé en ce que le mamelon d'appui (10) présente une sécurité (18) le maintenant en position de réglage et est pourvu, à l'une de ses extrémités tournée vers une collerette de réglage (14) du tourillon fileté (11), d'une collerette annulaire (20) faisant saillie vers l'intérieur et comportant le taraudage (13), tandis qu'à l'extrémité libre du tourillon fileté (11) est disposé un organe de butée (21) servant de sécurité au dévissage pour obtenir la course de réglage.

2. Ensemble vissé selon la revendication 1, caractérisé en ce que l'organe de butée (21) est constitué un anneau de sécurité (bague élastique ou "circlip") fixé dans une gorge (22) de la tige filetée (12).

3. Ensemble vissé selon la revendication 1 ou 2, caractérisé en ce que, tant le manchon d'appui (10) qu'également le tourillon fileté (11), comportent, sur des extrémités frontales éloignées l'une de l'autre, une collerette de réglage (14, 16), munie de surfaces de réglage (15) et dont la forme et la taille correspondent.

4. Ensemble vissé selon l'une des revendications précédentes, caractérisé en ce qu'il est prévu comme sécurité pour la position de réglage et pour un blocage déterminé du tourillon fileté par rapport à l'écrou, une vis à tête noyée (18), traversant radialement l'enveloppe du manchon d'appui (10) et réalisée notamment en matière plastique.

5. Ensemble vissé selon l'une des revendications précédentes, caractérisé en ce qu'un contre-écrou (19) est disposé sur la tige filetée du tourillon fileté (11) entre la collerette de réglage (14) du tourillon fileté (11) et le manchon d'appui (10).

6. Ensemble vissé selon la revendication 5, caractérisé en ce que le contre-écrou (19) correspond en forme et en taille aux collerettes de réglage (14, 16) du manchon d'appui (10) et du tourillon fileté (11).
